Europäisches Patentamt

European Patent Office

Office européen des brevets

(19)

(11) **EP 1 584 530 A1**

(12) **DEMANDE DE BREVET EUROPEEN**

(43) Date de publication:
**12.10.2005 Bulletin 2005/41**

(51) Int Cl.⁷: **B60T 7/12**

(21) Numéro de dépôt: **04290893.9**

(22) Date de dépôt: **05.04.2004**

(84) Etats contractants désignés:
**AT BE BG CH CY CZ DE DK EE ES FI FR GB GR HU IE IT LI LU MC NL PL PT RO SE SI SK TR**
Etats d'extension désignés:
**AL HR LT LV MK**

(71) Demandeur: **Delphi Technologies, Inc.**
**Troy, MI 48007 (US)**

(72) Inventeurs:
• **Alvarez, Belen**
  **75015 Paris (FR)**
• **Groult, Xavier**
  **95470 Survilliers (FR)**

(74) Mandataire: **Abello, Michel**
  **Cabinet Peuscet,**
  **78, avenue Raymond Poincaré**
  **75116 Paris (FR)**

(54) **Procédé d'assitance à la conduite en descente et dispositif associé**

(57) Procédé d'assistance à la conduite d'un véhicule engagé sur une pente. Le véhicule comporte un accéléromètre apte à mesurer une accélération longitudinale du véhicule en tant qu'accélération longitudinale mesurée. Le procédé consiste à :

- déterminer la valeur instantanée de la pente (p) sur laquelle se trouve le véhicule en calculant une accélération longitudinale instantanée à partir des mesures faite par des capteurs de vitesse de roue puis à comparer l'accélération longitudinale instantanée avec l'accélération longitudinale mesurée par l'accéléromètre ;
- déterminer (156) un couple de freinage théorique ($\Gamma_{th}$) en fonction de la pente pour que le véhicule atteigne une vitesse souhaitable ($V_0$);
- corriger (162) la valeur du couple de freinage théorique pour obtenir un couple de freinage cible ($\Gamma_c$); et,
- émettre (163) un signal correspondant à au couple de freinage cible en direction du système de régulation du.

FIG.3a

FIG. 3b

## Description

La présente invention est relative à l'assistance à la conduite d'un véhicule. Plus particulièrement, l'invention est relative à un procédé et un dispositif d'assistance à la conduite lors de la descente d'une pente sur laquelle le véhicule est engagé.

Un conducteur ayant immobilisé son véhicule sur une pente peut avoir des difficultés à le faire redémarrer. Le démarrage est une opération rendue plus difficile à réaliser lorsque le véhicule comporte une boîte de vitesses manuelle.

Dans un premier cas de figure, le conducteur cherche à démarrer son véhicule pour monter la pente. Le conducteur doit embrayer et accélérer de manière à ne pas caler, tout en relâchant progressivement le frein à main lorsque celui-ci a été utilisé. Le démarrage en côte est d'autant plus délicat à réaliser que la pente est importante.

Dans un deuxième cas, le conducteur cherche à démarrer son véhicule pour descendre la pente. Le conducteur utilise l'inertie du véhicule pour descendre la pente en relâchant progressivement les freins. Eventuellement, le moteur est utilisé comme frein par un actionnement dosé de la pédale d'embrayage, une vitesse ayant été passée.

Dans le cas particulier où la descente de la pente se fait à reculons, c'est-à-dire lorsque l'avant du véhicule est orienté vers le haut de la pente, le conducteur doit, en plus, se tourner vers l'arrière pour regarder la route tout en tournant le volant de direction. Si la pente de la route est importante, le conducteur est dans une position ne lui permettant pas de voir la route à suivre. Cette situation se présente souvent lors de la conduite d'un véhicule tout terrain sur une pente ayant une forte inclinaison.

Le document US 5 941 614 décrit une fonction d'assistance à la conduite en descente qu'elle que soit l'orientation du véhicule dans la pente et que le véhicule soit initialement à l'arrêt ou qu'il possède une certaine vitesse. Dans ce document, la fonction d'assistance est activée par le conducteur en appuyant sur un bouton. Le véhicule comporte des capteurs de vitesse de roue permettant de calculer la vitesse instantanée du véhicule. Par ailleurs, le système de freinage est un système entièrement hydraulique couplé à la pédale de frein actionnée par le conducteur.

Lors de l'appel à la fonction d'assistance, à condition que la boîte de vitesses se trouve sur la première vitesse ou sur la marche arrière, une force de freinage est appliquée de manière à réguler la vitesse instantanée du véhicule pour qu'elle atteigne une vitesse seuil de l'ordre de 10 kmh$^{-1}$. Plus précisément, le couple de freinage demandé par la fonction d'aide est une fonction de la différence entre la vitesse instantanée du véhicule et la vitesse seuil.

Dans ce document, l'utilisation d'un accéléromètre est envisagée, en conjonction avec l'accélération instantanée calculée à partir de la vitesse instantanée, pour déterminer l'angle de la pente. Cette information permet de changer la valeur de la vitesse seuil.

Le système décrit est complexe puisqu'il comporte un ensemble de vannes et de circuits hydrauliques permettant de gérer la pression à l'origine du couple de freinage.

De plus, selon cette méthode, on laisse le véhicule prendre de la vitesse le long de la pente avant d'appliquer un couple de freinage apte à aligner la vitesse instantanée avec la vitesse seuil. En conséquence, la vitesse instantanée peut dépasser la vitesse seuil avant d'être réduite pour passer alors en dessous de la valeur de la vitesse seuil. Ces oscillations de la vitesse sont ressenties par le conducteur. Au delà du manque de confort, le conducteur a l'impression que le véhicule est entraîné dans la pente avec une trop grande vitesse et a tendance à appuyer sur la pédale de frein. Ceci a pour conséquence de sortir de la fonction d'assistance.

Dans les véhicules récents, il est possible de prendre la main sur le système de freinage à la place du conducteur en appliquant un couple de freinage sur les roues sans intervention du conducteur. L'actionnement de la pédale de frein par le conducteur est découplé de l'application effective d'un couple de freinage sur l'une des roues du véhicule. Ces systèmes de freinage comportent soit des étriers hydrauliques soit des étriers électromécaniques, soit encore des étriers hydrauliques à l'avant et des étriers électromécaniques à l'arrière (système de freinage hybride).

L'invention a pour but de proposer un procédé et un dispositif améliorés d'assistance à la conduite pour la descente d'une pente ne présentant pas les inconvénients précédemment cités.

L'invention a pour objet un procédé d'assistance à la conduite d'un véhicule engagé sur une pente, le véhicule comportant un système de freinage découplé de l'actionnement d'une pédale de frein par le conducteur du véhicule et apte à appliquer un couple de freinage sur au moins une roue dudit véhicule ; au moins un capteur de vitesse de roue apte à mesurer une vitesse instantanée d'une roue du véhicule ; un accéléromètre apte à mesurer une accélération longitudinale de la caisse du véhicule en tant qu'accélération longitudinale mesurée, caractérisé en ce qu'il comporte les étapes consistant à :

- déterminer la valeur instantanée de la pente sur laquelle se trouve le véhicule en calculant une accélération longitudinale instantanée à partir des mesures de vitesse de roue faite par le au moins un capteur de vitesse de roue ; en déterminant une pente par comparaison de l'accélération longitudinale instantanée avec l'accélération longitudinale mesurée par l'accéléromètre ; et
- tester l'existence initiale simultanée de conditions initiales comportant au moins une condition d'entrée ; et, une fois que lesdites conditions initiales sont toutes vérifiées et tant qu'au moins une condition de sortie n'est pas vérifiée, réaliser des itérations successives d'une boucle principale de détermination d'un couple de freinage cible consistant à déterminer un couple de freinage théorique en fonction de la valeur instantanée de la pente pour que le véhicule atteigne une vitesse souhaitable ; corriger la valeur du couple de freinage théorique pour obtenir un couple de freinage cible ; et, émettre un signal correspondant à la valeur du couple de freinage cible en direction d'un système de régulation du freinage appartenant au système de freinage.

De préférence, le procédé comporte une étape consistant, à chaque itération de la boucle principale, à déterminer la vitesse de descente souhaitable en fonction de la valeur instantanée de la pente déterminée.

De préférence, le véhicule comportant une pédale d'accélération et un capteur d'accélération apte à mesurer le degré d'enfoncement de la pédale d'accélération par le conducteur, et, à chaque itération, la vitesse souhaitable est déterminée en fonction de la valeur instantanée du degré d'enfoncement de la pédale, à condition que la valeur instantanée du degré d'enfoncement de la pédale d'accélération soit comprise dans une plage limitée inférieurement par un premier degré prédéterminé d'enfoncement de la pédale d'accélération et supérieurement par un deuxième degré prédéterminé d'enfoncement de la pédale d'accélération.

De préférence, le couple de freinage théorique est déterminé à partir d'un tableau de calibration donnant la valeur du couple de freinage en fonction de la pente déterminée.

De préférence encore, le tableau de calibration est un tableau de calibration sélectionné parmi une pluralité de tableaux de calibration indexés par une valeur de vitesse, la pluralité de tableau étant stockée dans l'espace mémoire, et le tableau de calibration sélectionné est celui dont l'index correspond à ladite vitesse souhaitable.

De préférence une condition d'entrée consiste à comparer une valeur instantanée d'une vitesse du véhicule, calculée à partir des mesures effectuées par le au moins un capteur de roue, par rapport à une vitesse seuil basse prédéterminée, la condition d'entrée étant vérifiée lorsque la valeur instantanée de la vitesse est inférieure à la vitesse seuil basse.

De préférence, lorsque les conditions initiales, comportant au moins la comparaison de la vitesse instantanée du véhicule à la vitesse seuil basse, sont toutes vérifiées, le procédé comporte une procédure initiale de relâchement progressif des freins exécutée en parallèle de la boucle principale, l'exécution de la procédure initiale étant stoppée dès que le couple de freinage cible déterminé par la boucle principale est supérieur au couple requis par la procédure initiale.

De préférence, une condition d'entrée consiste à comparer une valeur instantanée de la pente par rapport à une première pente seuil prédéterminée, la condition d'entrée étant vérifiée lorsque la valeur instantanée de la pente est supérieure à la première pente seuil.

De préférence, le véhicule comporte une boîte de vitesse manuelle et un capteur apte à détecter une position courante du levier de vitesse, et une condition d'entrée consiste à tester la valeur instantanée de la position du levier de vitesse, la condition d'entrée étant vérifiée lorsque la valeur instantanée de la position du levier de vitesse correspond à la marche arrière.

De préférence, le véhicule comporte une pédale d'accélération et un capteur d'accélération apte à mesurer le degré d'enfoncement de la pédale d'accélération, et une condition d'entrée consiste à comparer la valeur instantanée du degré d'enfoncement de la pédale d'accélération par rapport à un premier degré d'enfoncement prédéterminé, la condition d'entrée étant vérifiée lorsque la valeur initiale dudit degré d'enfoncement est inférieure audit premier degré d'enfoncement.

De préférence, une condition de sortie consiste à comparer une valeur instantanée de la pente par rapport à une deuxième pente prédéterminée, la condition de sortie étant vérifiée lorsque la valeur instantanée de la pente est inférieure à la deuxième pente prédéterminée.

De préférence, une condition de sortie consiste à comparer une vitesse instantanée, calculée à partir des mesures effectuées par le au moins un capteur de vitesse de roue, par rapport à une vitesse seuil haute, la condition de sortie étant vérifiée lorsque la vitesse instantanée est supérieure à une vitesse seuil haute.

De préférence, la condition de sortie consiste à comparer un couple de freinage demandé, calculé à partir du degré d'enfoncement d'une pédale de frein, par rapport au couple de freinage cible, la condition de sortie étant vérifiée lorsque le couple de freinage demandé est supérieur audit couple de freinage cible.

De préférence, la correction de la valeur du couple de freinage théorique pour obtenir un couple de freinage cible est fonction d'un écart entre la valeur instantanée de la vitesse souhaitable et la valeur instantanée de la vitesse calculée.

De préférence, la correction consiste à soustraire un couple de freinage de correction du couple de freinage théorique.

L'invention a également pour objet une unité de calcul programmable comportant un processeur et au moins un espace mémoire, l'espace mémoire comporte des codes d'instruction d'un programme d'assistance à la conduite d'un véhicule engagé sur une pente, caractérisé en ce que ledit programme d'assistance à la conduite met en oeuvre le procédé d'assistance à la conduite décrit ci-dessus.

L'invention a également pour objet un dispositif d'assistance à la conduite d'un véhicule engagé sur une pente, comportant un système de freinage découplé de l'actionnement par le conducteur d'une pédale de frein ; au moins un capteur de vitesse de roue apte à mesurer la vitesse instantanée d'une roue du véhicule ; un accéléromètre apte à mesurer une accélération longitudinale de la caisse du véhicule en tant qu'accélération longitudinale mesurée et une unité de calcul programmable ; le dispositif étant caractérisé en ce que l'unité de calcul programmable est telle que décrite ci-dessus.

L'invention a également pour objet un véhicule caractérisé en ce qu'il comporte un dispositif d'assistance à la conduite tel que décrit ci-dessus.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :

- la figure 1 est une représentation schématique du dispositif, embarqué dans un véhicule, mettant en oeuvre le procédé d'assistance à la conduire selon l'invention ;
- la figure 2 est un schéma blocs représentant les différentes étapes permettant la détermination de la valeur instantanée de la pente ;
- la figure 3, réunion des figures 3a et 3b, est un schéma blocs du mode de réalisation préféré du procédé d'assistance à la conduite selon l'invention ;
- la figure 4 est un graphe illustrant différents paramètres cinématique d'un véhicule équipé du dispositif d'assistance à la conduite de la figure 1 engagé sur une pente constante ; et,
- la figure 5 est un graphe illustrant différents paramètres cinématique d'un véhicule équipé du dispositif d'assistance engagé sur une pente variable.

Dans ce qui suit, l'orientation du véhicule le long de la pente est telle que la descente s'effectue en marche arrière, c'est-à-dire que l'arrière du véhicule est dirigé vers le bas de la pente, ou encore que l'avant du véhicule est dirigé vers le haut de la pente. La pente en un point de la route est définie par un angle p avec l'horizontale.

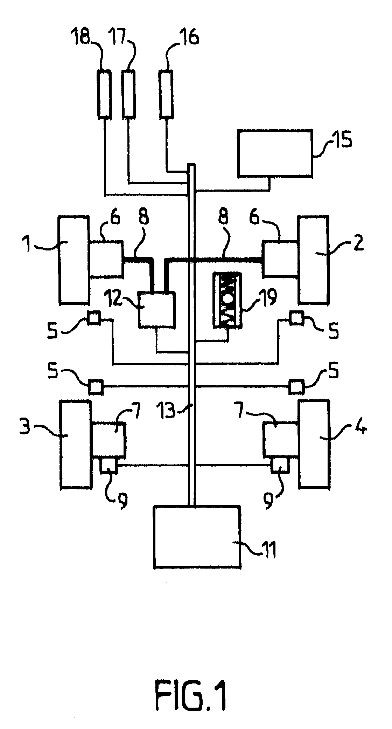

En se référant à la figure 1, le véhicule comporte quatre roues, deux roues avant 1 et 2 et deux roues arrière 3 et 4. Chacune des roues est équipée d'un capteur de vitesse de roue 5 apte à mesurer la vitesse instantanée de rotation de la roue à proximité de laquelle il est situé.

Dans le mode de réalisation actuellement préféré, le système de freinage du véhicule est un système de freinage hybride : les roues avant 1 et 2 sont respectivement équipées de freins hydrauliques 6 reliés à un actionneur hydraulique 12 via des connexions hydrauliques 8 ; les roues arrière 3 et 4 sont respectivement équipées de freins électromécaniques 7 équipés d'actionneurs électromécaniques 9.

Le dispositif d'assistance à la conduite comporte également, dans le mode de réalisation de la figure 1, un capteur de déplacement ou de degré d'enfoncement de la pédale de frein 16, un capteur de déplacement ou de degré d'enfoncement de la pédale d'accélération 17, un capteur de déplacement de la pédale d'embrayage 18 (ou un équivalent comme un interrupteur sur la pédale d'embrayage indiquant le point de patinage) et un capteur de position du levier de la boîte de vitesses 15.

Le véhicule comporte un capteur d'accélération longitudinal 19 d'un type comportant une masse suspendue de manière élastique. Le capteur 19 est apte à émettre un signal correspondant à la valeur instantanée d'une accélération longitudinale mesurée $A_m$ du véhicule.

L'ensemble des capteurs décrits ci-dessus ainsi que les actionneurs hydrauliques 12 et électromécaniques 9 communiquent avec une unité de calcul 11, embarquée, au travers d'un bus de communications 13. Le bus de communications 13 peut, par exemple, supporter le protocole CAN-Bus.

L'unité de calcul 11 possède toutes les caractéristiques électroniques et logicielles d'un ordinateur. En particulier, l'unité de calcul 11 comporte un processeur apte à exécuter des instructions en temps réel et un espace mémoire dans lequel sont mémorisées différentes séries d'instructions formant des programmes exécutables. L'unité de calcul 11 comporte également des interfaces entrée/sortie nécessaires à la communication avec les autres éléments du dispositif. Ces interfaces sont aptes à recevoir et écrire dans l'espace mémoire des données entrantes, telles que des mesures effectuées par les capteurs, et à lire dans l'espace mémoire et à émettre des données sortantes en direction des actionneurs.

L'unité de calcul 11 a plus particulièrement pour fonction de commander les étriers de frein. L'unité de calcul 11 exécute par exemple du programme de contrôle du comportement du véhicule, tels que ABS (contrôle anti-blocage), ESP (contrôle de stabilité) ou TCS (contrôle anti-patinage). L'unité de calcul 11 programmable est en particulier apte à exécuter les codes d'instructions d'un programme d'assistance à la conduite d'un véhicule engagé sur une pente pour la mise en oeuvre du procédé selon l'invention.

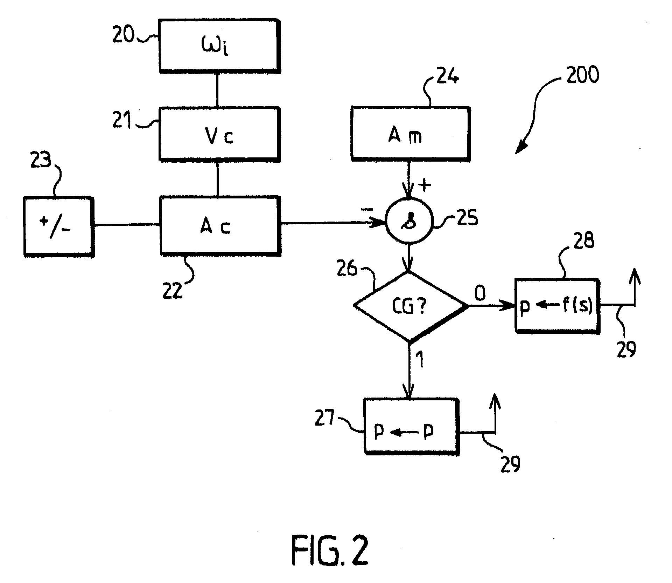

En référence à la figure 2, un procédé 200 est décrit permettant d'estimer la valeur instantanée de la pente. Ce procédé élémentaire de détermination de la pente constitue une étape du procédé d'assistance à la conduite selon l'invention.

A l'étape 20, on effectue l'acquisition des vitesses $\omega_i$ de rotation de chacune des roues mesurées par les différents capteurs 5.

A l'étape 21, une vitesse $V_c$ correspondant à la vitesse instantanée du véhicule est calculée à l'aide des vitesses des roues $\omega_i$. Pour obtenir cette vitesse calculée $V_c$, différents procédés classiques bien connus de l'homme du métier sont utilisables.

A l'étape 22, une accélération longitudinale calculée $A_c$ correspondant à une accélération instantanée du véhicule est calculée par dérivation temporelle de la vitesse calculée $V_c$. Lorsque les capteurs de vitesse de roue 5 sont des capteurs non signés, l'information qu'ils délivrent est en fait la valeur absolue de la vitesse de roue $\omega_i$. Dans ce cas, la vitesse calculée $V_c$, calculée à l'étape 21, et l'accélération longitudinale calculée $A_c$, calculée à l'étape 22, sont des valeurs absolues. Une étape 23 est alors prévue pour déterminer le signe qu'il faut affecter à l'accélération longitudinale calculée $A_c$ en fonction du rapport de la boîte de vitesses sélectionné. Cette information est donnée par le capteur 15 donnant la position du levier de vitesse ainsi que par le capteur de position de la pédale d'embrayage 18 qui permet de savoir si la vitesse est embrayée.

A l'étape 23, si la marche arrière est engagée et que la pédale d'embrayage est relevée, on affecte le signe - à l'accélération longitudinale calculée $A_c$. Si la marche avant est engagée et que la pédale d'embrayage est relevée, on affecte le signe + à l'accélération longitudinale calculée $A_c$. Si la boîte de vitesses est au neutre ou que la pédale d'embrayage est enfoncée, il se présente deux cas : soit le véhicule était en mouvement à l'instant précédent, auquel cas on conserve le signe correspondant au dernier rapport qui a été engagé ; soit le véhicule était à l'arrêt à l'instant précédent, auquel cas on utilise le capteur d'accélération ou accéléromètre 19 pour déterminer dans quel sens le véhicule est en train de démarrer.

En variante, si les capteurs de vitesse de roue 5 sont des capteurs signés, l'étape 23 est supprimée. Dans les deux réalisations, on obtient une accélération longitudinale calculée $A_c$ qui a une valeur algébrique dont le signe correspond au sens de déplacement du véhicule.

A l'étape 24, la valeur instantanée de l'accélération longitudinale mesurée par le capteur d'accélération 19 est acquise en tant en tant qu'accélération longitudinale mesurée $A_m$. Cette mesure $A_m$ est algébrique.

A l'étape 25, un signal de différence s est calculé : $s = A_m - A_c$.

A l'étape 26, une condition logique de gel des mesures de pente CG est éprouvée. Dans l'exemple représenté, la condition CG est une variable booléenne prenant la valeur 0 lorsqu'elle est non vérifiée et 1 lorsqu'elle est vérifiée. Pour éprouver la condition CG, on calcule la dérivée temporelle du signal de différence s : $D = ds/dt$. Pour cela, de nombreuses méthodes de dérivation d'un signal échantillonné sont disponibles. La condition CG est :

$$CG = [|V_c| < S_1 \text{ ou } (|V_c| \leq S_3 \text{ et } |D| > S_2)].$$

$S_1$ et S3 sont des seuils de vitesse positifs prédéterminés. Par exemple, $S_1 = 1,5$ km/h et $S_3 = 5$ km/h.

$S_2$ est un seuil de stabilité positif fixé qui peut être déterminé à la suite d'essais.

En variante, lorsque le véhicule est en mouvement, le taux de variation D peut être calculé en tant que variation spatiale de la variable de différence s : $D = (ds/dt)/V$.

Si la condition de gel CG n'est pas vérifiée, l'étape 28 est effectuée. Une variable d'estimation de pente p est actualisée en fonction de la valeur actuelle du signal de différence s : $p = \tan[\text{Arcsin}(s/g)]$, où g est le module de l'accélération de la gravitation.

Au contraire, si la condition de gel CG est vérifiée, l'étape 27 est effectuée. La valeur de l'estimation de pente obtenue à l'itération précédente est conservée en tant que valeur actuelle de la pente.

Après l'étape 27 ou 28, la flèche 29 indique le retour à l'étape 20 pour une nouvelle itération du procédé d'estimation de la pente p.

La pente estimée p est une estimation précise de la pente tout au long d'une manoeuvre. Même si le gel momentané de la mesure de la pente entraîne une erreur de l'estimation, la pente estimée p peut, de manière fiable, servir à calculer différentes variables de contrôle. En particulier elle est utilisée par l'unité de calcul 11 pour fournir une assistance à la conduite pour la descente d'une route en pente.

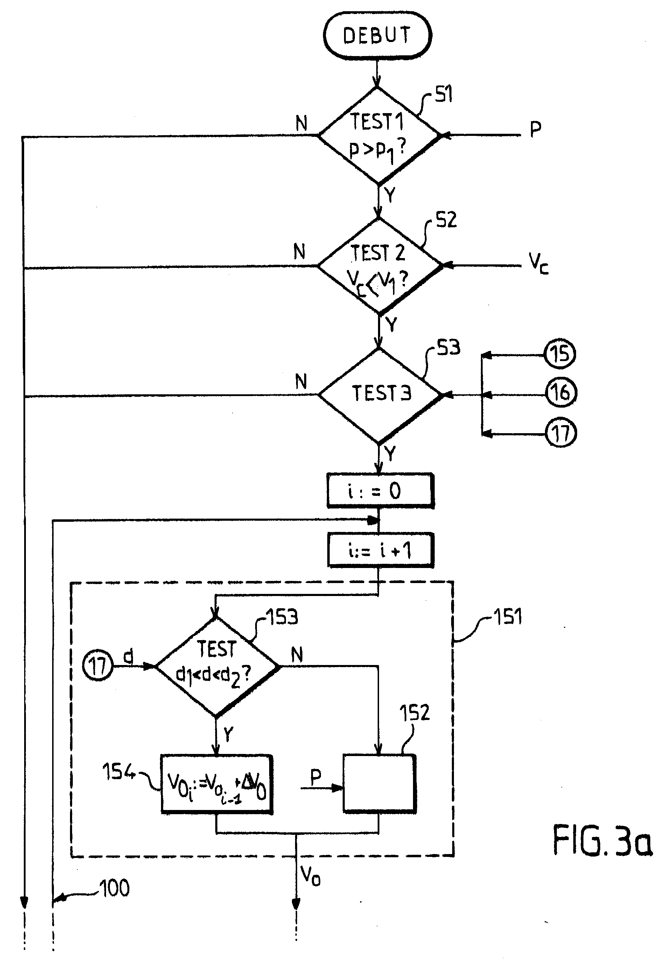

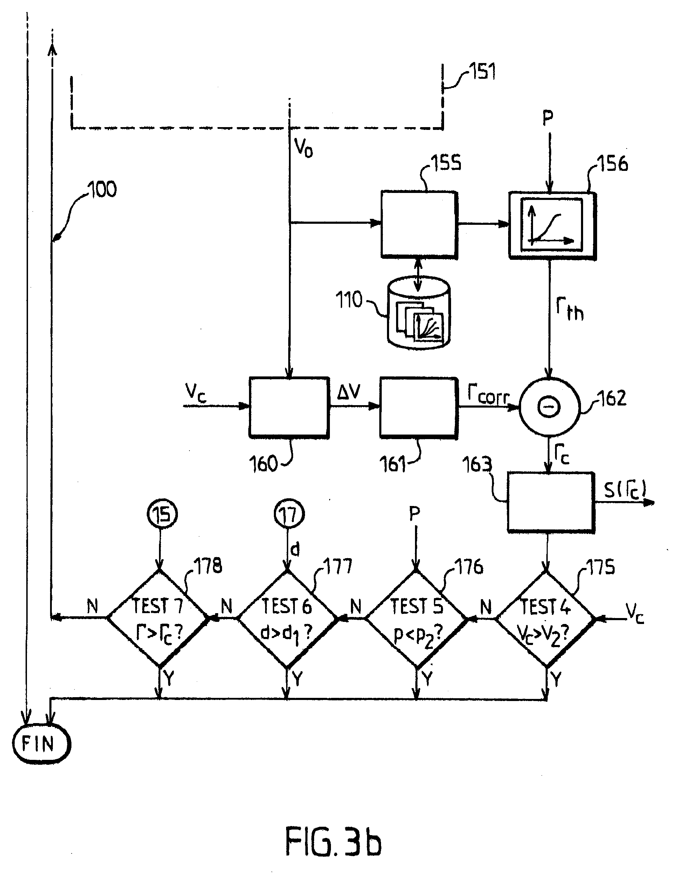

La figure 3, disposée sur deux planches pour plus de clarté, représente de manière schématique la succession des étapes du procédé d'assistance à la conduite selon l'invention. Ce procédé est par exemple mis en oeuvre par l'exécution d'un programme correspondant mémorisé dans l'espace mémoire de l'unité de calcul 11.

Le procédé débute par une pluralité de vérifications de conditions d'entrée permettant, lorsqu'elles sont réalisées simultanément, de rentrer dans la boucle principale 100 de détermination du couple de freinage cible.

A l'étape 51, le premier test Test1 consiste à vérifier si le véhicule est engagé sur une pente. Autrement dit, la valeur instantanée de la pente estimée p est comparée à la valeur d'une première pente seuil $p_1$. Pour passer à l'étape suivante, il faut que p soit supérieure à $p_1$. La première pente seuil $p_1$ vaut par exemple 5 %.

A l'étape 52, le deuxième test Test2 consiste à vérifier si le véhicule est à l'arrêt. Ceci se traduit par la comparaison de la vitesse calculée $V_c$ avec une vitesse seuil basse $V_1$. Pour passer à l'étape suivante, $V_c$ doit être inférieure à $V_1$. En fait, $V_1$ n'est pas choisie nulle car les incertitudes dues aux mesures faites par les capteurs entraînent que $V_c$ fluctue autour de zéro alors que le véhicule est effectivement à l'arrêt.

Le troisième test Test3 (étape 53) correspond à la détection d'un comportement du conducteur traduisant une intention de démarrer. Le comportement détecté consiste à enclencher la marche arrière, à relâcher la pédale de frein et à ne pas appuyer, ou très faiblement, sur la pédale d'accélération. Ces informations sont données par les capteurs 15, 16 et 17.

Lorsque toutes les conditions d'entrée sont satisfaites, le programme entre dans la boucle principale 100 de détermination d'un couple de freinage cible $\Gamma_c$. Si l'une de ces conditions d'entrée n'est pas vérifiée, l'unité de calcul 11 stoppe l'exécution du programme. Celui-ci sera exécuté à nouveau depuis le début un premier intervalle de temps prédéterminé plus tard, par exemple quelques dixièmes de secondes plus tard.

Les itérations de la boucle principale sont éxécutes périodiquement à un deuxième intervalle de temps prédéterminé. Chaque itération de la boucle principale 100 est indexée par un nombre entier i.

La boucle principale débute par une étape de détermination d'une vitesse souhaitable $V_0$. Au cours de cette étape 151, la vitesse qui semble être souhaitable pour descendre la pente est déterminée. La valeur de vitesse souhaitable $V_0$ peut être une valeur de référence constante prédéfinie par exemple de 3 kmh$^{-1}$.

De préférence, la valeur de vitesse souhaitable $V_0$ peut dépendre de la valeur instantanée de la pente p : plus la pente est importante, plus la vitesse souhaitable $V_0$ est réduite ; plus la pente est faible plus la vitesse souhaitable $V_0$ est augmentée. Par exemple, à l'étape 152 on ajoute un terme correctif à la valeur de référence constante de 3 kmh$^{-1}$, le terme correctif étant proportionnel à l'écart de la pente p à une pente de référence $p_0$ par exemple de 5%.

En outre, dans le mode de réalisation actuellement préféré, le conducteur peut influer directement sur la valeur de la vitesse souhaitable $V_0$. Si le conducteur déplace la pédale d'accélération au delà d'un premier degré d'enfoncement de la pédale d'accélération $d_1$ tout en restant en deçà d'un deuxième degré d'enfoncement $d_2$, ceci sera interprété comme la volonté du conducteur d'augmenter la vitesse souhaitable $V_0$. Si, à l'étape 152 le degré d'enfoncement d est détecté dans la plage limitée inférieurement par $d_1$ et supérieurement par $d_2$, la vitesse souhaitable $V_0$ de l'itération précédente i-1 est augmentée d'une valeur prédéterminée $\Delta V_0$ à l'étape 154. La vitesse souhaitable $V_0$ sera donc augmentée progressivement au cours d'une succession d'itérations. Si le degré d'enfoncement d n'est pas dans l'intervalle [$d_1$, $d_2$] la valeur calculée à l'étape 152 est prise en compte.

On passe alors à l'étape de détermination d'un couple de freinage théorique. L'espace mémoire 110 de l'unité de calcul 11 comporte une pluralité de tableaux de calibration indexés par une valeur de vitesse. Un tableau de calibration donne la valeur du couple de freinage à appliquer sur les roues du véhicule en fonction de la pente p pour que, si la pente était constante, le véhicule atteigne effectivement la valeur de vitesse servant d'index. Chacun des tableaux de calibration est obtenu en usine en effectuant des tests sur un véhicule caractéristique de la gamme puis en mémorisant les résultats obtenus dans l'espace mémoire de l'unité de calcul de chacun des véhicules.

A l'étape 155, le tableau de calibration dont l'index correspond à la valeur courante de la vitesse souhaitable $V_0$, déterminée en sortie de l'étape 151, est sélectionné parmi l'ensemble des tableaux de calibration présents dans l'espace mémoire 110.

Puis, à l'étape 156, la valeur instantanée de la pente p permet de lire sur le tableau de calibration sélectionné la valeur du couple de freinage théorique $\Gamma_{th}$.

La valeur du couple de freinage théorique $\Gamma_{th}$ obtenue à l'étape 156 ne peut être émise directement en tant que valeur cible du couple de freinage vers le système de régulation du freinage. En effet, le couple de freinage théorique $\Gamma_{th}$ est le couple à appliquer pour maintenir la vitesse du véhicule à la vitesse souhaitable $V_0$. Mais, la vitesse du véhicule, donnée par la vitesse calculée $V_c$, peut être inférieure à la vitesse souhaitable $V_0$ et il faut alors appliquer un couple de freinage cible $\Gamma_c$ légèrement plus faible que le couple de freinage théorique $\Gamma_{th}$ pour augmenter la vitesse $V_c$ du véhicule. A l'inverse, si la vitesse du véhicule est supérieure à la vitesse souhaitable $V_0$, il faut appliquer un couple de freinage cible $\Gamma_c$ légèrement plus important que le couple de freinage théorique $\Gamma_{th}$ pour réduire la vitesse $V_c$ du véhicule.

Il s'avère donc nécessaire de corriger le couple de freinage théorique $\Gamma_{th}$ à l'aide d'un couple de correction $\Gamma_{corr}$ pour obtenir le couple de freinage cible $\Gamma_c$. Dans le mode de réalisation décrit, le couple de correction $\Gamma_{corr}$ est une fonction croissante de l'écart $\Delta V$ entre la vitesse souhaitable $V_0$ et la vitesse calculée $V_c$.

A l'étape 160, l'écart $\Delta V$ est obtenu par soustraction de la vitesse calculée $V_c$ de la vitesse souhaitable $V_0$ obtenue en sortie de l'étape 151 : V = $V_0$-$V_c$. Il est à noter que si $V_c$ est inférieure à $V_0$, le signe de l'écart $\Delta V$ est positif.

A l'étape 161, le couple de correction $\Gamma_{corr}$ est calculé. Par exemple, $\Gamma_{corr}$ est proportionnel à l'écart $\Delta V$ et à sa dérivée temporelle.

A l'étape 162, le couple de freinage cible $\Gamma_c$ est obtenu par soustraction du couple de correction $\Gamma_{corr}$ au couple de freinage théorique $\Gamma_{th}$. Cette valeur courante du couple de freinage cible $\Gamma_c$ est émise à l'étape 163 sous forme par exemple d'un signal S($\Gamma_c$) en direction du système de régulation du système de freinage du véhicule, par ailleurs connu.

Si l'écart $\Delta V$ est positif, le couple de correction $\Gamma_{th}$ est inférieur au couple théorique $\Gamma_{th}$ et le véhicule peut prendre plus de vitesse dans la pente.

Avant de boucler le processus de détermination du couple de freinage et de débuter une nouvelle itération, différentes conditions de sortie sont testées. Si l'une de ces conditions de sortie est vérifiée, l'exécution du programme sort de la boucle principale 100 est se termine immédiatement.

A l'étape 175, le test Test4 consiste à comparer la valeur de la vitesse calculée $V_c$ avec une vitesse seuil haute $V_2$ par exemple de 20 kmh$^{-1}$. En effet, si le conducteur appuie continûment sur la pédale d'accélération, la vitesse souhaitable $V_0$ augmente et par conséquent la vitesse de descente de la pente augmente également. Il n'est pas nécessaire de poursuivre l'exécution du programme d'assistance à la conduite si la vitesse calculée $V_c$ est supérieure à la vitesse seuil haute $V_2$.

A l'étape 176, le test Test5 consiste à comparer la valeur de la pente p avec une deuxième pente prédéterminée $p_2$. Si le véhicule est arrivé au bas de la pente, qui se caractérise par une pente quasiment nulle, il n'est pas nécessaire de poursuivre l'exécution du programme d'assistance à la conduite. La valeur de la deuxième pente prédéterminée $p_2$ est faible pour tenir compte des erreurs sur la valeur calculée de la pente p.

Il est également souhaitable d'ajouter une condition de sortie Test6 sur l'actionnement de la pédale d'accélération. Si le conducteur appuie sur la pédale d'accélération de manière à ce que le capteur 17 détecte un déplacement important, supérieur au deuxième degré d'enfoncement $d_2$, cela signifie que le conducteur souhaite conserver la main et contrôler lui-même la descente de la pente. Cette condition est testée à l'étape 177.

Une condition de sortie Test7 sur la pédale de frein est testée à l'étape 178. Si le conducteur appuie sur la pédale de frein de manière à produire une force de freinage supérieure à ce que recommande le programme d'assistance à la conduite, i.e. le couple de freinage cible $\Gamma_c$, c'est que le conducteur souhaite reprendre la main et stopper à nouveau le véhicule. Si à l'étape 178 cette condition de sortie est vérifiée, on sort de l'exécution du programme, sinon on exécute une nouvelle itération de la boucle principale 100.

La demanderesse a effectué des essais du comportement cinématique d'un véhicule équipé du dispositif d'assistance à la conduite en descente.

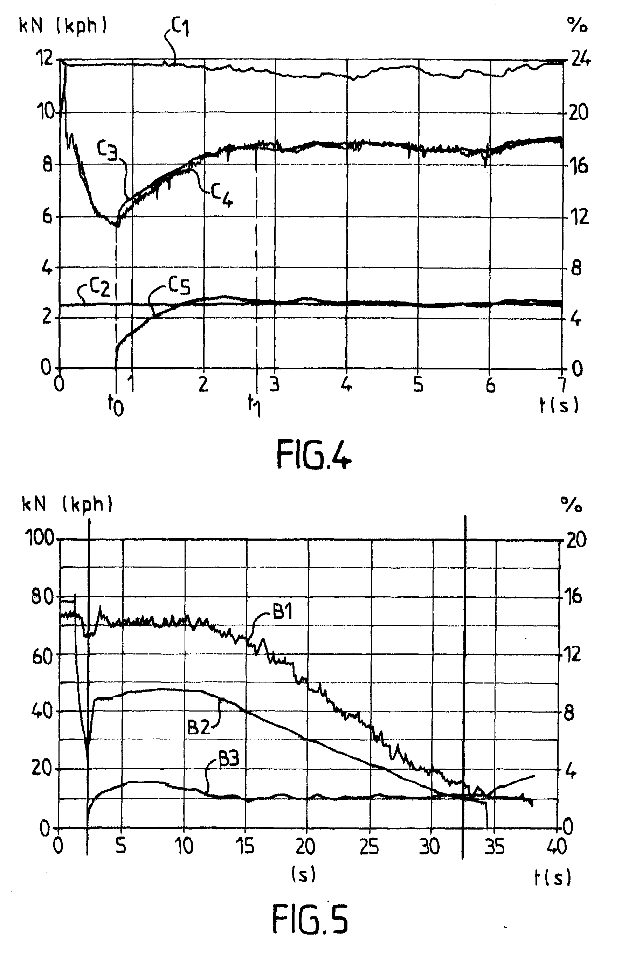

Sur la figure 4, plusieurs graphes sont représentés qui correspondent à des paramètres cinématiques réels d'un véhicule engagé sur une pente sensiblement constante de 24% : la courbe C1 représente l'évolution temporelle de la valeur de la pente p déterminée selon le procédé exposé à la figure 2. Dans cette simulation, le dispositif d'assistance à la conduite est actif dès l'instant t=0 et le reste durant toute la simulation. On suppose que le conducteur n'actionne pas la pédale d'accélération. En conséquence, la vitesse souhaitable $V_0$ est constante au cours de la simulation (courbe C2).

La courbe C3 reproduit les variations du couple de freinage cible $\Gamma_c$. Au début du test, le couple de freinage cible diminue. Dans le mode de réalisation de la fonction d'assistance selon l'invention, la condition d'entrée Test1 est que le véhicule soit initialement à l'arrêt. La fonction d'assistance peut alors comporter en variante une procédure initiale permettant le relâchement progressif des freins. En conséquence, le véhicule, entraîné dans la pente par son poids, acquiert de la vitesse.

Avant l'instant $t_0$, le couple requis par cette procédure de relâchement, bien que diminuant au cours du temps, reste encore supérieur au couple de freinage cible calculé par le dispositif d'assistance.

A l'instant $t_0$, le couple de freinage cible demandé par le dispositif d'assistance devient supérieur au couple de freinage demandé par la procédure initiale. A partir de cet instant, le dispositif d'assistance prend en main le freinage. Il s'agit alors de contrôler le véhicule pour que la vitesse calculée $V_c$, représentée par la courbe C5, tende asymptotiquement vers la vitesse souhaitable $V_0$. Lorsque cette vitesse est effectivement atteinte, par exemple en $t_1$, le couple de freinage à appliquer pour conserver cette vitesse est constant et correspond au couple de freinage théorique $\Gamma_{th}$. Sur la figure 4, la courbe C4 représente l'évolution temporelle du couple de freinage effectivement appliqué sur les roues arrière du véhicule et mesuré par des capteurs de force de freinage disposés sur les étriers électromécaniques. Entre les instant $t_0$ et $t_1$, la transition correspond à une correction importante du couple de freinage théorique $\Gamma_{th}$ car l'écart entre la vitesse souhaitable $V_0$ et la vitesse calculée $V_c$ est important. Le couple de freinage cible $\Gamma_c$ augmente progressivement avec la vitesse. Ainsi, le conducteur ne ressent aucun à-coup du système de freinage.

Sur la figure 5, lors d'un essai au cours duquel le véhicule descend une route dont la pente varie, on a représenté l'évolution temporelle de la pente mesurée p (courbe B1), du couple de freinage cible $\Gamma_c$ (courbe B2) et de la vitesse calculée $V_c$ du véhicule (courbe B3). Les courbes de la figure 5 sont difficiles à interpréter, puisque la pente p évolue en permanence ce qui entraîne une modification continuelle de la vitesse souhaitable $V_0$. Ce qu'il faut noter c'est que l'évaluation de la pente p à un instant donné est immédiatement prise en compte dans le calcul du couple de freinage cible à appliquer. L'avantage du procédé selon l'invention réside en cette réponse immédiate du dispositif d'assistance à l'information de pente. On n'attend pas que les effets de la pente sur la vitesse du véhicule se fassent ressentir, i.e. une augmentation de la vitesse calculée $V_c$, pour réduire la vitesse en freinant. On anticipe le freinage nécessaire pour maintenir le véhicule à une vitesse constante (courbe B3).

Les phénomènes d'oscillation de la vitesse, dus à la régulation sur la variable de vitesse elle même, n'existent plus ici. Le confort, la sécurité réelle mais également la sécurité perçue par le conducteur sont donc sensiblement améliorés par la mise en oeuvre du procédé d'assistance selon l'invention.

Dans une autre variante du procédé selon l'invention, l'assistance à la descente d'une pente est utilisée lorsque l'orientation du véhicule est telle que l'avant du véhicule est dirigé vers le bas de la pente. Pour activer le mode d'assistance, il faut alors tester (Test3) si la première vitesse est enclenchée.

Le procédé d'assistance est avantageusement mis en oeuvre dans un véhicule comportant un système de freinage hybride de telle sorte que le couple de freinage cible calculé par le procédé d'assistance soit spécifiquement appliqué sur les seules roues arrière. De cette manière, les caractéristiques particulières des étriers électromécaniques sont utilisées et en particulier leur actionnement silencieux.

Bien que l'invention ait été décrite en liaison avec un mode de réalisation particulier, il est bien évident qu'elle n'est nullement limitée à celui-ci et qu'elle comprend tous les équivalents techniques des moyens décrits ainsi que leurs combinaisons si celles-ci entrent dans le cadre de l'invention.

**Revendications**

1. Procédé d'assistance à la conduite d'un véhicule engagé sur une pente, ledit véhicule comportant :

   - un système de freinage découplé de l'actionnement d'une pédale de frein par le conducteur du véhicule et apte à appliquer un couple de freinage sur au moins une roue dudit véhicule ;
   - au moins un capteur de vitesse de roue (5) apte à mesurer une vitesse instantanée d'une roue dudit véhicule ;
   - un accéléromètre (19) apte à mesurer une accélération longitudinale de la caisse dudit véhicule en tant qu'accélération longitudinale mesurée ($A_m$);

   **caractérisé en ce que** le procédé comporte les étapes consistant à :

   - déterminer la valeur instantanée de la pente sur laquelle se trouve ledit véhicule en :

     o calculant une accélération longitudinale instantanée ($A_c$) à partir des mesures de vitesse de roue faite par ledit au moins un capteur de vitesse de roue ;
     o déterminant une pente (p) par comparaison de ladite accélération longitudinale instantanée avec ladite accélération longitudinale mesurée par ledit accéléromètre ;

   - tester l'existence initiale simultanée de conditions initiales comportant au moins une condition d'entrée ; et, une fois que lesdites conditions initiales sont toutes vérifiées et tant qu'au moins une condition de sortie (175-178) n'est pas vérifiée, réaliser des itérations successives d'une boucle principale (100) de détermination d'un couple de freinage cible consistant à :

     o déterminer (156) un couple de freinage théorique ($\Gamma_{th}$) en fonction de la valeur instantanée de ladite pente pour que le véhicule atteigne une vitesse souhaitable ($V_0$) ;

     o corriger (162) la valeur dudit couple de freinage théorique pour obtenir un couple de freinage cible ($\Gamma_c$) ; et,
     o émettre (163) un signal correspondant à la valeur dudit couple de freinage cible en direction d'un système de régulation du freinage appartenant au système de freinage.

2. Procédé selon la revendication 1, **caractérisé en ce que** le procédé comporte une étape consistant, à chaque itération de ladite boucle principale (100), à déterminer ladite vitesse de descente souhaitable ($V_0$) en fonction de la valeur instantanée de la pente (p) déterminée.

3. Procédé selon la revendication 1 ou la revendication 2, ledit véhicule comportant une pédale d'accélération et un capteur d'accélération (17) apte à mesurer le degré d'enfoncement de ladite pédale d'accélération par le conducteur, **caractérisé en ce que**, à chaque itération, ladite vitesse souhaitable ($V_0$) est déterminée en fonction de la valeur instantanée du degré d'enfoncement de la pédale (d), à condition que ladite valeur instantanée du degré d'enfoncement de la pédale d'accélération soit comprise dans une plage limitée inférieurement par un premier degré prédéterminé d'enfoncement de la pédale d'accélération ($d_1$) et supérieurement par un deuxième degré prédéterminé d'enfoncement de la pédale d'accélération ($d_2$).

4. Procédé selon l'une des revendications 1 à 3, **caractérisé en ce que** ledit couple de freinage théorique ($\Gamma_{th}$) est déterminé à partir d'un tableau de calibration donnant la valeur du couple de freinage en fonction de la pente (p).

5. Procédé selon la revendication 4, **caractérisé en ce que** ledit tableau de calibration est un tableau de calibration sélectionné (155) parmi une pluralité de tableaux de calibration indexés par une valeur de vitesse, ladite pluralité de tableau étant stockée dans ledit espace mémoire (110), et ledit tableau de calibration sélectionné est celui dont l'index correspond à ladite vitesse souhaitable.

6. Procédé selon l'une des revendications 1 à 4, **caractérisé en ce que** ladite au moins une condition d'entrée consiste à comparer (52) une valeur instantanée d'une vitesse ($V_c$) du véhicule, calculée à partir des mesures effectuées par ledit au moins un capteur de roue (5), par rapport à une vitesse seuil basse prédéterminée ($V_1$), ladite condition d'entrée étant vérifiée lorsque ladite valeur instantanée de la vitesse est inférieure à la dite vitesse seuil basse.

7. Procédé selon la revendication 6, **caractérisé en**

**ce que**, lorsque lesdites conditions initiales, comportant au moins ladite comparaison de la vitesse instantanée du véhicule à ladite vitesse seuil basse, sont toutes vérifiées, le procédé comporte une procédure initiale de relâchement progressif des freins exécutée en parallèle de ladite boucle principale, l'exécution de ladite procédure initiale étant stoppée dès que le couple de freinage cible déterminé par ladite boucle principale est supérieur au couple requis par ladite procédure initiale.

8. Procédé selon l'une des revendications 1 à 7, **caractérisé en ce que** ladite au moins une condition d'entrée consiste à comparer (51) une valeur instantanée de ladite pente (p) par rapport à une première pente seuil prédéterminée ($p_1$), ladite condition d'entrée étant vérifiée lorsque ladite valeur instantanée de ladite pente est supérieure à ladite première pente seuil.

9. Procédé selon l'une des revendications 1 à 8, ledit véhicule comportant une boîte de vitesses manuelle et un capteur (15) apte à détecter une position courante du levier de vitesse, **caractérisé en ce que** ladite au moins une condition d'entrée consiste à tester (53) la valeur instantanée de ladite position du levier de vitesse, ladite condition d'entrée étant vérifiée lorsque ladite valeur instantanée de ladite position du levier de vitesse correspond à la marche avant ou à la marche arrière.

10. Procédé selon l'une des revendications 1 à 9, ledit véhicule comportant une pédale d'accélération et un capteur d'accélération (17) apte à mesurer le degré d'enfoncement de ladite pédale d'accélération, **caractérisé en ce que** ladite au moins une condition d'entrée (53) consiste à comparer la valeur instantanée dudit degré d'enfoncement de la pédale d'accélération par rapport à un premier degré d'enfoncement prédéterminé ($d_1$), la condition d'entrée étant vérifiée lorsque la valeur initiale dudit degré d'enfoncement est inférieure audit premier degré d'enfoncement.

11. Procédé selon l'une des revendications 1 à 10, **caractérisé en ce que** ladite au moins une condition de sortie consiste à comparer (176) une valeur instantanée de ladite pente (p) par rapport à une deuxième pente prédéterminée ($p_2$), la condition de sortie étant vérifiée lorsque ladite valeur instantanée de la pente est inférieure à ladite deuxième pente prédéterminée.

12. Procédé selon l'une des revendications 1 à 11, **caractérisé en ce que** ladite au moins une condition de sortie consiste à comparer (175) une vitesse instantanée ($V_c$), calculée à partir des mesures effectuées par ledit au moins un capteur de vitesse de roue (5), par rapport à une vitesse seuil haute ($V_2$), ladite condition de sortie étant vérifiée lorsque ladite vitesse instantanée est supérieure à une vitesse seuil haute.

13. Procédé selon l'une des revendications 1 à 12, **caractérisé en ce que** ladite au moins une condition de sortie consiste à comparer (178) un couple de freinage demandé, calculé à partir du degré d'enfoncement d'une pédale de frein, par rapport audit couple de freinage cible ($\Gamma_c$), ladite condition de sortie étant vérifiée lorsque ledit couple de freinage demandé est supérieur audit couple de freinage cible.

14. Procédé selon l'une des revendications 1 à 13, **caractérisé en ce que** la correction de la valeur dudit couple de freinage théorique ($\Gamma_{th}$) pour obtenir un couple de freinage cible ($\Gamma_c$) est fonction d'un écart ($\Delta V$) entre la valeur instantanée de ladite vitesse souhaitable ($V_0$) et la valeur instantanée de ladite vitesse calculée ($V_c$).

15. Procédé selon la revendication 14, **caractérisé en ce que** ladite correction consiste à soustraire un couple de freinage de correction ($\Gamma_{corr}$) dudit couple de freinage théorique ($\Gamma_{th}$).

16. Unité de calcul (11) programmable comportant un processeur et au moins un espace mémoire (110), ledit espace mémoire comportant des codes d'instruction d'un programme d'assistance à la conduite d'un véhicule engagé sur une pente, **caractérisé en ce que** ledit programme d'assistance à la conduite met en oeuvre un procédé d'assistance à la conduite selon l'une quelconque des revendications 1 à 15.

17. Dispositif d'assistance à la conduite d'un véhicule engagé sur une pente, comportant :

   - un système de freinage découplé de l'actionnement par le conducteur d'une pédale de frein;
   - au moins un capteur de vitesse de roue (5) apte à mesurer la vitesse instantanée d'une roue dudit véhicule ;
   - un accéléromètre (19) apte à mesurer une accélération longitudinale de la caisse dudit véhicule en tant qu'accélération longitudinale mesurée ($A_m$) ;
   - une unité de calcul programmable (11) ;

   **caractérisé en ce que** ladite unité de calcul programmable est une unité de calcul selon la revendication 16.

18. Véhicule **caractérisé en ce qu'**il comporte un dispositif d'assistance à la conduite selon la revendication 17.

FIG.1

FIG. 2

DEBUT

TEST 1
P > P₁ ?  — S1

N

P

TEST 2
V_C < V₁ ?  — S2

N

V_C

TEST 3 — S3

N

⑮
⑯
⑰

i : = 0

i := i + 1

TEST
d₁ < d < d₂ ?  — 153

⑰ d

N

Y

151

152

154

$V_{0_i} := V_{0_{i-1}} + \Delta V_0$

P

100

V_0

# FIG. 3a

FIG. 3b

FIG.4

FIG.5

**Office européen
des brevets**

**RAPPORT DE RECHERCHE EUROPEENNE**

Numéro de la demande

EP 04 29 0893

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | WO 01/14185 A (CONTINENTAL TEVES AG & CO OHG ; BAITER ULRICH (DE); FUEHRER JOCHEN (DE) 1 mars 2001 (2001-03-01) | 1,2,8,9, 16-18 | B60T7/12 |
| Y | * page 3, ligne 10 - page 6, ligne 26 * | 6,10 | |
| A | * page 10, ligne 24 - page 11, ligne 20 * | 3,4, 11-15 | |
| | * figures 1,2 * * revendications 1-13 * ----- | | |
| Y | US 6 692 090 B1 (CORELL THOMAS ET AL) 17 février 2004 (2004-02-17) * revendications 15,16 * ----- | 6 | |
| Y | EP 1 101 676 A (TOYOTA MOTOR CO LTD) 23 mai 2001 (2001-05-23) * alinéa [0025] * ----- | 10 | |
| A | US 2002/041167 A1 (YONEKURA TAKAHIRO ET AL) 11 avril 2002 (2002-04-11) * revendication 6 * ----- | 1,10, 16-18 | **DOMAINES TECHNIQUES RECHERCHES (Int.Cl.7)** |
| A | US 6 701 224 B1 (KLUSEMANN RAINER) 2 mars 2004 (2004-03-02) * revendications 1,2 * ----- | 1,16-18 | B60T |

Le présent rapport a été établi pour toutes les revendications

| Lieu de la recherche | Date d'achèvement de la recherche | Examinateur |
|---|---|---|
| Munich | 31 août 2004 | Colonna, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...............................................................................
& : membre de la même famille, document correspondant

EPO FORM 1503 03.82 (P04C02)

**EP 1 584 530 A1**

**ANNEXE AU RAPPORT DE RECHERCHE EUROPEENNE
RELATIF A LA DEMANDE DE BREVET EUROPEEN NO.**  EP 04 29 0893

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-08-2004

| Document brevet cité au rapport de recherche | | Date de publication | Membre(s) de la famille de brevet(s) | | Date de publication |
|---|---|---|---|---|---|
| WO 0114185 | A | 01-03-2001 | DE | 10039457 A1 | 05-07-2001 |
| | | | DE | 10039458 A1 | 26-07-2001 |
| | | | WO | 0114185 A1 | 01-03-2001 |
| | | | WO | 0114186 A1 | 01-03-2001 |
| | | | EP | 1212221 A1 | 12-06-2002 |
| | | | EP | 1212222 A1 | 12-06-2002 |
| US 6692090 | B1 | 17-02-2004 | DE | 19920617 A1 | 28-09-2000 |
| | | | DE | 50006754 D1 | 15-07-2004 |
| | | | WO | 0053473 A1 | 14-09-2000 |
| | | | EP | 1165353 A1 | 02-01-2002 |
| | | | JP | 2003525156 T | 26-08-2003 |
| EP 1101676 | A | 23-05-2001 | JP | 2001146150 A | 29-05-2001 |
| | | | DE | 60009004 D1 | 22-04-2004 |
| | | | EP | 1101676 A2 | 23-05-2001 |
| | | | US | 6571768 B1 | 03-06-2003 |
| US 2002041167 | A1 | 11-04-2002 | JP | 2002030952 A | 31-01-2002 |
| | | | JP | 2002046508 A | 12-02-2002 |
| | | | JP | 2002051404 A | 15-02-2002 |
| | | | DE | 10135192 A1 | 31-01-2002 |
| US 6701224 | B1 | 02-03-2004 | DE | 10026102 A1 | 22-02-2001 |
| | | | WO | 0114187 A1 | 01-03-2001 |
| | | | EP | 1210256 A1 | 05-06-2002 |
| | | | JP | 2003507256 T | 25-02-2003 |

EPO FORM P0460

Pour tout renseignement concernant cette annexe : voir Journal Officiel de l'Office européen des brevets, No.12/82

17